# EUROPEAN PATENT APPLICATION

(11) **EP 1 453 291 A2**
(43) Date of publication of application: **01.09.2004**
(21) Application number: 04007924.6
(22) Date of filing: 22.10.1999
(51) Int. Cl.: H04N 1/00

(54) **Digital media frame**

(30) Priority: 18.11.1998 US 195355
(62) Divisional of application: 99972326.5
(71) Applicant: EASTMAN KODAK COMPANY, Rochester, New York 14650 (US)
(72) Inventor: Bandaru, M. Krishna, California, 94087 (US); Siegel, Robert E., California, 94025 (US)
(74) Representative: Barker, Brenda

(57) **Abstract**

A method and a device for displaying images on a digital media frame is disclosed. In one embodiment, the device includes a system for receiving and displaying digital images over a network comprising at least one digital media device associated with a member of a share group, the digital media device including a memory for storing digital images therein and a display for displaying the stored digital images, a server in communication with the at least one digital media device via a network, the server connected to the network for communicating digital images to the digital media device, the server determining if the digital image has been provided by members authorized to communicate images to the digital media device, and wherein the digital media device automatically stores in the memory only those digital images provided by members of the share group authorized to communicate images to the digital media device.

## Description

### BACKGROUND OF THE INVENTION

### Field of the Invention

The present invention relates generally to the field of electronic pictorial representation, more specifically, the present invention relates to digital image processing.

### Description of the Related Art

With image representations evolving rapidly into a viable consumer electronic business, digital photography and digital images are emerging to fill the needs of image representation. Images are commonly captured by digital cameras or digital scanners. A typical digital camera captures a picture and stores the captured pictorial information in a digital data format. Also, a conventional digital scanner scans pictures, such as, a color photographic film (e.g., 35 mm), and converts the scanned pictorial information into digital image data.

Once an image is captured and the captured image data is generated, it is often difficult to display the captured image. One conventional approach is to use a personal computer ("PC") to display the images. In this approach, the image data is first transferred to the PC from an image capturing device, such as, a digital camera, and then the PC displays the image according to the image data received. A problem with this approach is that a regular PC may not be able to process the image data without additional software or hardware to reconfigure the PC. Moreover, a PC is usually not portable. Even though a laptop PC is portable, the laptop PC is inadequate for use as a picture frame because not only does the laptop PC have to be reconfigured so that it is capable of processing the image data, but it is also too expensive to use a laptop PC as a picture frame.

Another commonly employed approach is to use an image processing machine, such as, a workstation, a mini-computer, or a mainframe. Like the PC, the image data must first be transferred to the image processing machine, and the image processing machine subsequently, displays the image after processing the image data. This approach posts similar problems as a PC that the image processing machine has to be reconfigured before it is able to process the image data. Also, the image processing machine is not typically mobile.

U.S. Patent No. 5,682,326 is directed to a digital image processing system designed to quickly and easily edit movies in a non-linear environment. This reference does not teach or suggest the providing of share groups or the providing of a digital media device associated with the share group for sharing images among the group authorized to communicate the digital media device.

U.S. Patent No. 5,706,290 is directed to a controlling apparatus and method for executing a plurality of control functions for communicating multimedia articles allowing the communication among a variety of different type devices. This reference does not disclose a media display device for sharing images among a share group of authorized individuals.

Accordingly, it is desirable to have an inexpensive digital media frame that is capable of storing digital image data and displaying stored images. As will be seen, one embodiment of the present invention provides a portable digital media frame that displays images.

### SUMMARY OF THE INVENTION

A method and a device for displaying images on a digital media frame is disclosed. In one embodiment, the device includes a system for receiving and displaying digital images over a network comprising at least one digital media device associated with a member of a share group, the digital media device including a memory for storing digital images therein and a display for displaying the stored digital images, a server in communication with the at least one digital media device via a network, the server connected to the network for communicating digital images to the digital media device, the server determining if the digital image has been provided by members authorized to communicate images to the digital media device, and wherein the digital media device automatically stores in the memory only those digital images provided by members of the share group authorized to communicate images to the digital media device.

### BRIEF DESCRIPTION OF THE DRAWINGS

The present invention is illustrated by way of example and not limitation in the accompanying figures.

**Figure 1** illustrates a connection between Digital Media Frame ("DMF") and external input devices in accordance with an embodiment of the present invention.

**Figure 2** illustrates a block diagram of DMF in accordance with an embodiment of the present invention.

**Figure 3** illustrates a block diagram of DMF in accordance with an embodiment of the present invention.

**Figure 4** illustrates a DMF having a display, a processing unit, and a user input device in accordance with an embodiment of the present invention.

**Figure 5** is a flow chart illustrating a data flow of DMF in accordance with an embodiment of the present invention.

**Figure 6** is a flow chart illustrating a data control of DMF in accordance with an embodiment of the present invention.

### DETAILED DESCRIPTION

A digital media frame ("DMF') and method for displaying digital pictures is disclosed. In the following description numerous specific details are set forth in order to provide a thorough understanding of the present invention. It will be apparent, however, to one having ordinary skill in the art that the specific detail need not be employed to practice the present invention. In other instances, well known materials or methods have not been described in detail in order to avoid obscuring the present invention and minimal display hardware.

The DMF allows a user to display at least one digital image with minimal user intervention. The DMF is capable of receiving image data from various external input devices, such as, digital cameras, video cameras, computers, telephone lines, television cables, and Internet servers. Upon receipt of the image data, the DMF generates auxiliary information relating to each image and stores the image together with the auxiliary information in the memory. The DMF, subsequently, fetches the image data from the memory with the auxiliary information and displays the images on a display.

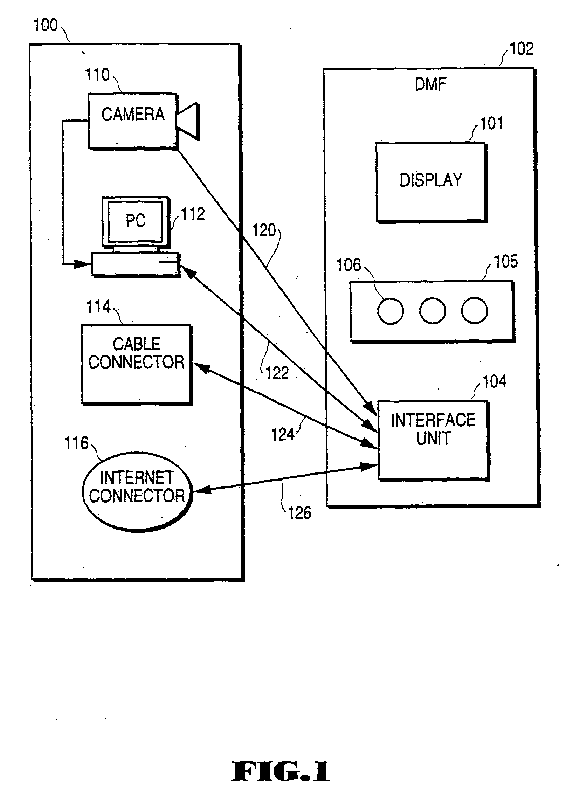

**Figure 1** illustrates an embodiment of a connection between DMF and external input devices 100. The connection includes a DMF 102, a camera 110, a personal computer ("PC") 112, a cable connector 114, and an Internet connector 116. The DMF 102 further contains an interface unit 104 and a user input component 105. The user input component 105 also contains user input buttons 106, which are the input devices. The interface unit 104 includes at least one port capable of connecting to the camera 100, PC 112, the cable connectors 114, and the Internet connector 116 using connecting cables 120, 122, 124, and 126, respectively. The interface unit 104 is further capable of receiving and processing both digital and analog image data. It will be apparent to one of ordinary skill in the art that one or more of these external input devices may be connected to a particular DMF 102. It will also be apparent that the equivalent conventional input devices may be similarly connected. The digital camera may be a digital still camera or a digital video camera, and the video camera may be an analog video camera.

The camera 110 can either be a digital or a video camera. In one embodiment, the camera 110 can directly transfer the captured image to the DMF. In another embodiment, the camera 110 can first transfer the captured images to a computer 112 and the computer 112, subsequently, transfers the image data to the DMF 102. The advantage of using a computer 112 as a forwarding station between the camera 110 and the DMF 102 is to perform some functions where the DMF 102 is unable to perform, such as data conversion.

The computer 112, which may be a PC, a workstation, a mini-computer, or a mainframe computer, or a processor based system, receives image data from other devices, such as, scanners, Internet servers, or cameras 110. Upon receipt of image data, the computer 112 may perform some functions before the computer 112 passes the image data to the DMF 102. The function may involve reordering the sequence of the images to be displayed, or converting one type of image data format to another type of image data format, and so on.

The cable connectors 114 include television and telephone lines. The lines could be optical, metal, or cordless media. In one embodiment, the interface unit 104 is capable of receiving the image data directly from the cable connectors 114. In another embodiment, the interface unit 104 receives the image data from a forwarding station, such as a computer 112, where the cable 114 is connected to the computer 112.

The Internet connector 116 is another external input device 100 that enables the DMF 102 to receive the image data directly from an Internet node. In one embodiment, the DMF 102 is configured to be able to read ("HyperText Markup Language") HTML and to interface with Transmission Control Protocol (" TCP")/ Internet protocol ("IP"'). It should be noted that the connecting cables, 120, 122, 124, and 126 can be optical, metal, or cordless media.

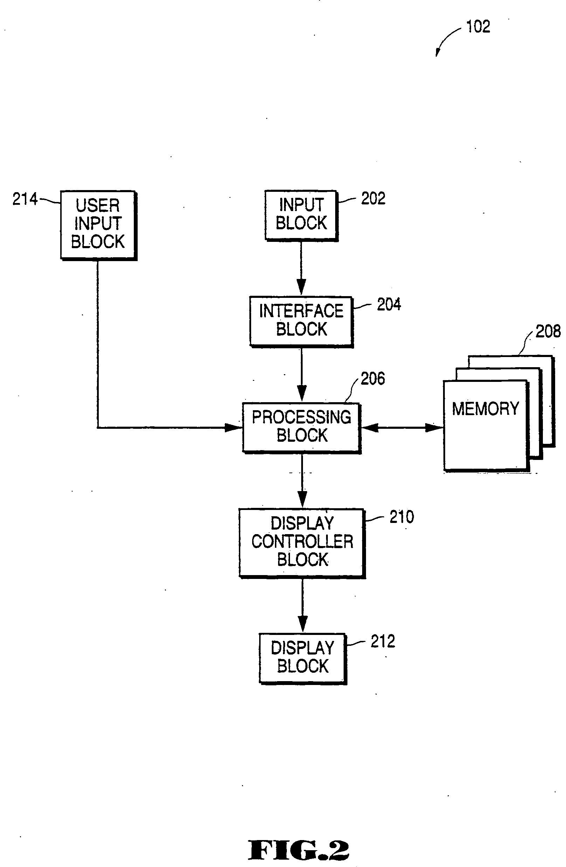

**Figure 2** illustrates a block diagram of DMF 102. Block 202 represents external input devices 100, which include digital and video cameras, scanners, computers, and Internet servers. Digital and video cameras include digital video cameras, digital still cameras, analog video cameras, and so on. Upon capturing image data, the external input devices transfer captured image data to the interface block 204. Block 204 represents an interface unit of the DMF 102, where the interface unit 104 receives the image data from block 202. After receiving the image data, the interface unit identifies the type of protocol or data format being used to transfer the image data and further determines whether a conversion may be required. A conversion to a native DMF data format is needed if the DMF is unable to identify and to process originally received data format for image data. Once the image data format is properly identified, the image data is passed from block 204 to block 206 for processing.

Block 206 represents processor(s) or micro-controller(s), which is a processing unit for the DMF 102. Block 206 determines where the image data is to be stored and which sequence of the images is to be displayed. Block 206 also generates auxiliary information for each image, where the auxiliary information includes a color assignment, date and time of the image data created and received, Internet address, audio information, image orientations, and so on. The color assignment maps out image color distribution from an available color grid according to the color distribution of the image data. The date and time of the image data created and received indicates the date and time that each image was created and the date and time that the image was received by the DMF 102. The Internet address indicates which Internet node was used for sending the image data. to the DMF 102. In one embodiment, the Internet address links to other websites that are related to the image. For example, if an image describes a child, the linked websites describe child's family. Audio information includes both the original sound that came with the image data and edited sound created by users. Moreover, block 206 also receives control signals from block 214.

Block 214 represents a user input unit. In one embodiment, block 214 gives a user certain controls to manage how images should be displayed.. Block 214 can be any conventional input device, such as, a push button, a screen input device, remote control input device, or a sound activated input device (including speech recognition input-output device). The output(s) of block 214, which is a control signal from a user to indicate how images should be displayed, is fed onto block 206, where block 206 uses the output(s) of block 214 as an input(s) for determining how to display images. Block 206 also receives inputs from block 208.

Block 208 represents a memory block, (or set of memory blocks) which may include, for example, one or more of the following: dynamic random access memory ("DRAM"), static random access memory ("SRAM"), read-only memory, ("ROM"), non-volatile memory, magnetic disk storage, magnetic tape storage, CD-ROM, DVD-ROM, and so on. In one embodiment, block 206 controls the access of block 208. It should be noted that block 208 may also receive data from other blocks, such as block 204 and block 210.

After block 206, the image data is transferred from block 206 to block 210, where the image data is prepared for displaying. Block 210 represents display controller. In one embodiment, block 210 is capable of controlling various types of display devices, such as, a liquid crystal display ("LCD"), a cathode-ray tube ("CRT"), or a silicon-based display. Block 210 processes the image data by converting the image data display codes to a format compatible with particular display hardware. Block 210 may also contain a memory to store the display codes. After conversion, block 210 transfers the display codes along with display controls to block 212.

Block 212 represents a display device, which may be a LCD, a CRT, a silicon based display, or an image projector. After receipt of the display codes, block 212 displays images. It should be noted that blocks 210 and 212 can receive input signals from other blocks, such as block 214 could have direct input signals to block 210.

Moreover, there is a power block (not shown in the figure) that includes both AC and DC power supplies. In one embodiment, the DC battery backup power supply is employed for preventing memory loss upon AC power supply disconnection.

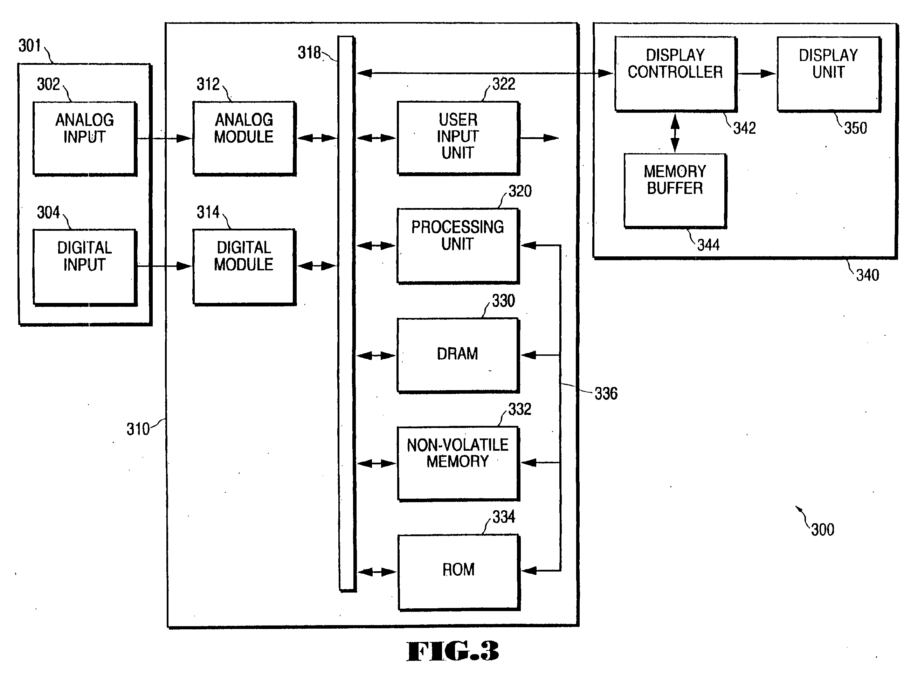

**Figure 3** illustrates an embodiment of DMF architecture 300, which includes an image input block 301, image processing block 310, and image displaying block 340.
The image input block 301 captures images and transfers the captured image data to the image processing block 310. The image processing block 310 identifies types of image data and stores the identified image data. The image processing block 310 further attaches auxiliary information to each image and then transfers the image data to the image displaying block 340. The image displaying block 340 displays images according to the image data received.

The image input block 301 contains an analog input unit 302 and a digital input unit 304. The analog input unit 302 is an analog input device, such as a video camera, and is capable of generating analog image data according to captured images. Upon generation of the analog image data, the analog input unit 302 transfers the analog image data to the image processing block 310. The digital input unit 304 is a digital input device, such as a digital camera, and is capable of generating digital image data according to captured analog images. After properly generating the digital image data, the digital input unit 304 transfers the digital image data to the image processing block 310.

The image processing block 310 contains an analog module 312, a digital module 314, a processing block 320, a user input unit 322, a dynamic random access memory ("DRAM") 330, an non-volatile memory unit 332, a read only memory ("ROM") 334, and an internal bus 318. The analog module 312 includes an analog receiver circuit and a synchronizing circuit. The analog receiver circuit receives analog image data from the image input block 301. After receiving the analog image data, the synchronizing circuit performs analog to digital conversion and subsequently synchronizes the converted image data to generate image data. After the data is received and synchronized, the analog module 312 drives the digital image data on the internal bus 318.

In one embodiment, the digital module 314 includes a digital receiver circuit and a translation circuit (not shown in the figure). In one embodiment, the digital receiver circuit may include a universal serial bus ("USB") port for receiving digital image data from the image input block 301. Upon receipt of the digital image data, the translation circuit determines whether a translation of the image data is needed. A translation is required if the data format of the input image data is a foreign data format. The foreign data format is a type of data format or protocol that the DMF is unable to implement. In one embodiment, the DMF has multiple native data formats, and is also capable of recognizing multiple foreign data formats. Consequently, the foreign data format of the image data must be converted to a native data format before the image data can be implemented for display. After the image data is properly received and translated, the digital module 314 drives the digital image data on the internal bus 318.

The internal bus 318 connects to the processing unit 320, DRAM 330, non-volatile memory 332, ROM 334, the analog module 312, and the digital module 314. In one embodiment, the processing unit 320 is used to control the internal bus 318, such as issuing bus busy and bus grant signals. It should be noted that other types of bus connections and bus controls are possible.

The processing unit 320, in one embodiment, connects to the internal bus 318, the user input unit 322, DRAM 330, non-volatile memory 332, and ROM 334. The processing unit 320 performs functions including image size scaling, color space conversion, image filtering, image decoding, image data compression/decompression, and so on. In another embodiment, a processor in the processing unit 320 is configured to determine a sequence of images to be displayed. The processor also controls variable time interval or time transition types between images. The interval transition time indicates the time interval between the current image and the next image to be displayed. The image transition is a mechanism of retiring current image while phasing in the next image. In one embodiment, the image transition moves current and next images in one direction as the current image move out while the next image moves.

In another embodiment, the processing unit 320 maps out image colors from available color grid according to color attributions of the image data. The processing unit 320 further generates auxiliary information for each image, where the auxiliary information may contains a color assignment, date and time of the image data generate and received, Internet addresses, audio information, image orientations, and so on.

In yet another embodiment, the processing unit 320 is capable of receiving a predetermined sequence of images to be displayed from an external input device 100, such as a computer. Moreover, a sequence of images to be displayed may be altered by control signals from a user, such as a pause signal from the user input unit 322. The processing unit 320 further manages a low power management circuit to conserve power consumption upon disconnection of AC power supply.

The processing unit 320 is further configured to control the memory access. The memory devices includes DRAM 330, non-volatile memory 332, ROM 334, magnetic disk storage, magnetic tape storage, and so on. In one embodiment, the non-volatile memory 332 is a flash memory and is used to prevent memory loss upon disconnection of power supplies. The processing unit 320 controls the memory access using control bus 336, which carries various control signals. In another embodiment, the processing unit 320 controls the memory access using the internal bus 318 for issuing control signals, such as bus grant and bus busy signals.

In one embodiment, the sequence of the images to be displayed is a function of where the image data is to be stored in the memory. In this embodiment, the image display block 340 fetches the next image data from a predefined physical memory location. In another embodiment, a sequence of the images to be displayed can be reordered by the processing unit 320. In yet another embodiment, the sequence can be further altered by a user using the user input unit 322.

In one embodiment, the processing unit 320 controls the internal bus 318 and the control bus 336. While the control bus 336 is used for control signals, the internal bus 318 is used for data. It should be noted that the internal bus 318 and the control bus 336 can be merged into one single bus. In another embodiment, the internal bus 318 contains a bus controller to control the bus access.

The user input unit 322 is an input device, such as a push button switch, a touch screen input device, remote control device, or a sound activated input device (speech recognition input-output device), and so on. In one embodiment, the user input unit 322 provides display controls to users, such as a fast forward, a reverse, and a pause functions. The fast forward function allows a user to view the next image, while the reverse function allows a user to view the previous image.

When the image data is properly identified and ordered, the processing unit 320 drives the image data together with the auxiliary information on the internal bus 318. In one embodiment, the processing unit 320 uses a private bus (not shown in the figure) between the processing unit 320 and the display controller 342 for transferring the image data. Upon receipt of the image data, the image display block 340 prepares to display the images in response to the image data and the auxiliary information.

The image display block 340 contains a display unit 350, a display controller 342, and a memory buffer 344. In one embodiment, the display unit 350 is a LCD. In another embodiment, the display unit 350 is a CRT. In yet another embodiment, the display unit 350 is a silicon based display. After receiving the image data, the display controller 342 generates the image display code in response to the image data and the auxiliary information. The display unit 350, subsequently, receives display codes for images from the display controller 342 and displays the image. In one embodiment, the display controller 342 stores a set of display code in the memory buffer 344. In another embodiment, the display controller 342 stores the display code in the non-volatile memory 332 or DRAM 330.

It should be noted that the display controller 342 could be integrated into the display unit 350 or be integrated into the processing unit 320. Also, the image processing block 310 and image display block 340 may be integrated in a single integrated circuit ("IC").

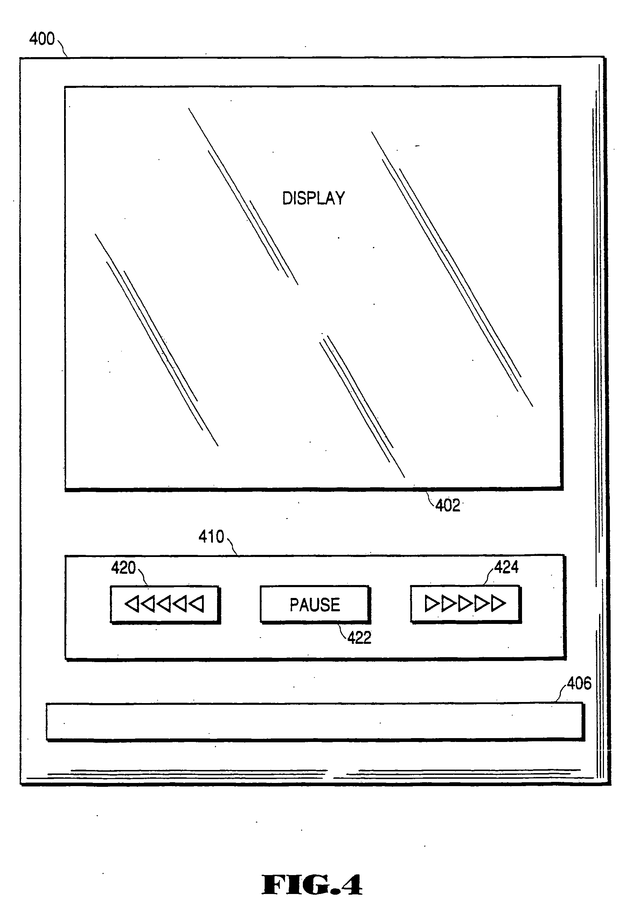

Referring to **Figure 4**, an embodiment of the DMF 400 is illustrated. The DMF 400 contains a display 402, a user input device 410, and a processing unit 406. The display 402 displays images according to the image data received. The processing unit 406 performs image processing functions as described in above. The user input device 410 is an input device that allows a user to change images that are currently displaying.

The user input device 410 contains a reverse button 420, a pause button 422, and a fast forward button 424. The reverse button 420 allows a user to view previously displayed images, while the fast forward button 424 allows a user to view next sequential images. The pause button 422 causes a currently displaying image to freeze until a release command is issued by a subsequent activation of the pause button 422. In another embodiment, the user input device 410 may be merged with the display 402, where inputs can be made through a conventional touch screen input device. In yet another embodiment, the inputs can be made through a conventional voice activated input device, such as a speech recognition input/output device. In yet another embodiment, the inputs come from a computer using conventional port connections.

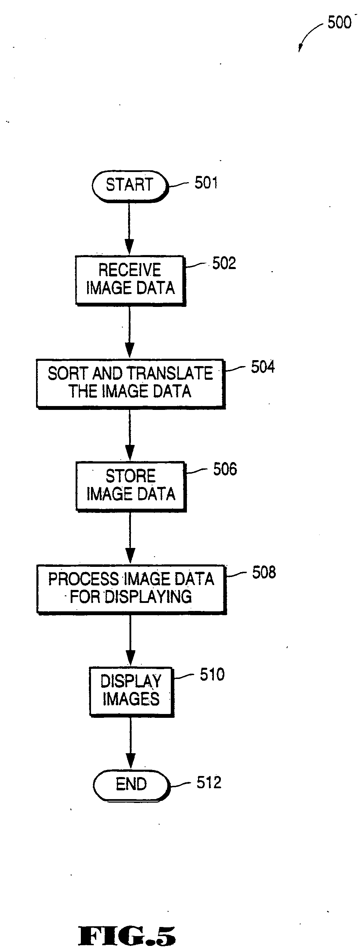

**Figure 5** is a flow chart illustrating a data flow within the DMF 400. A process of image displaying starts at block 501. The process proceeds to block 502, where an interface unit of the DMF 400 receives the image data. The image data may be captured by image capturing devices, such as a digital or video camera. Upon receipt of the image data, the interface unit 301 identifies whether the image data is in a digital data format or in an analog data format. If the image data is in the analog data format, the interface unit will convert the analog data format to a digital data format. If the image data is in the digital data format, no conversion from analog to digital ("A/D") is needed.

After block 502, the process proceeds to block 504, where the image data is sorted in a predefined sequence or a special ordered sequence of images. Before moving on to the next block, the process determines whether a translation is required. A translation is needed if the DMF 400 identifies that the data format of the image data is a foreign data format. Consequently, the foreign data format must be translated into a DMF native data format before the image data can be further processed. After the image data is properly sorted and translated, the process proceeds to the next block.

The process moves from block 504 to block 506, where the image data is stored in the memory. In one embodiment, the location of the image data stored determines the sequence of the images to be displayed. After block 506, the process proceeds to block 508, where the image data is converted to display codes. In one embodiment, block 508 determines the interval transition time and the various types of image transitions. The interval transition time indicates the time interval between the current image and the next image to be displayed. The image transition is a mechanism of retiring current images from the display while phasing in the next image. In one embodiment, the image transition moves current and next images in one direction as the current image moves out while the next image moves in. In another embodiment, the image transition fades out the current image while fading in the next image. After block 508, the process proceeds to block 510, where images are displayed according the image data together with the auxiliary information. The process ends at block 512.

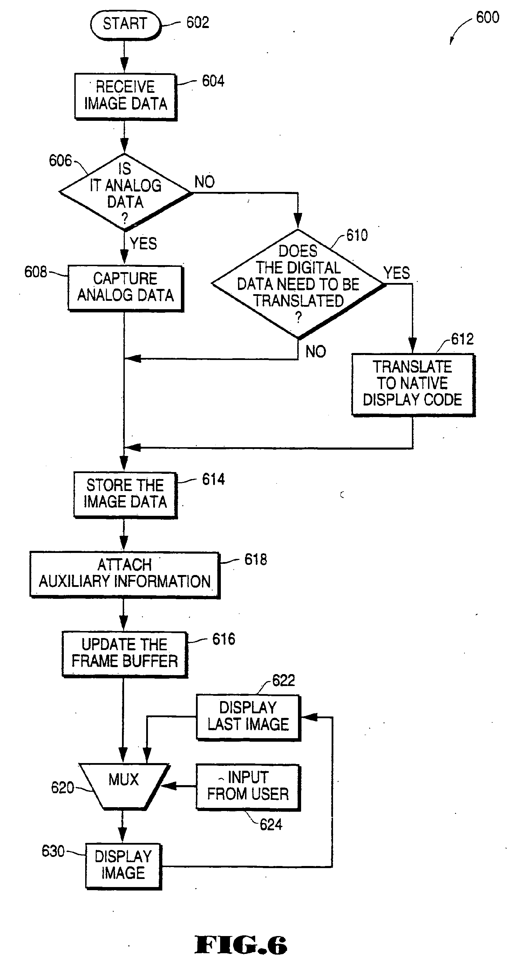

**Figure 6** is a flow chart illustrating an embodiment of a controlled data flow of DMF 600. A process of image display starts at block 602. The process moves from block 602 to block 604, where an interface unit of the DMF receives the image data, which may be captured by image capturing devices, such as digital or video cameras. Upon receipt of the image data, the process proceeds to block 606, where the process identifies whether the image data is in analog or digital data format. If the image data is in analog data format, the process proceeds from block 606 to block 608. At block 608, the process converts the analog data format into digital data format. After conversion, the process proceeds from the block 608 to block 614 where the image data is stored.

If the image data is not in analog data format, which indicates that the image data is in digital data format, the process proceeds from block 606 to block 610. At block 610, the process identifies whether the digital image data needs to be translated into a DMF recognizable digital data format. If the digital data format of the image data is recognizable, the process proceeds from block 610 to block 614.

If the image data is a foreign data format, the process moves from block 610 to block 612, where a translation is performed. At block 612, the foreign data format of input image data is translated into a DMF native data format. In one embodiment, the DMF may have several native data formats, which will reduce the frequency of translation. In another embodiment, the DMF is capable of identifying multiple foreign data formats. After translation, the process proceeds from block 612 to block 614, where the image data is stored.

In one embodiment, the image data is stored in a non-volatile memory device, such as a flash memory, for preventing data loss upon disconnection of power supply. In another embodiment, portable battery power supply is used to prevent data loss upon disconnection of power supply. In yet another embodiment, the image data is stored in a magnetic storage, such as a magnetic disk storage or a magnetic tape storage, for preventing memory loss. After block 614, the process moves to block 618, where the auxiliary data is attached to each image.

At block 618, the process aligns images and attaches the auxiliary information to each image. In one embodiment, the alignment of images can be sequential according to the order of the memory location that the image data stored. In another embodiment, the alignment of images is predefined. The auxiliary information contains the information of a color assignment, a date and time of the image generated, information of Internet addresses, audio, image orientations, and so on.

After attaching the auxiliary information, the process proceeds from block 618 to block 616, where the image data together with the auxiliary information are stored in a memory buffer. The memory buffer is a small and fast memory device that provides fast memory access for displaying images. In one embodiment, the memory buffer is non-volatile memory device to prevent memory loss upon power disconnection. In another embodiment, the memory buffer is regular random access memory having a backup portable power supply to prevent memory loss. After block 616, the process moves to block 620, where the output from the memory buffer can be selected for displaying.

At block 620, the process further receives signals from block 624 and block 622. The block 624 contains input control signals from the user, while the block 622 contains the image data for the last displayed images. The process at block 624 receives a user input, which may indicate to pause the current image. In another embodiment, the user input is used as one of many combinational logic inputs for selecting the next image.

Upon selecting the image data, the process proceeds from block 620 to block 630, where the image is displayed. When the current image is displayed, the process proceeds from block 630 to block 622, where the current image is stored. In one embodiment, block 622 stores the image data only for one image, which is the last displayed image. In another embodiment, block 622 stores the image data for a set of recently displayed images.

In the foregoing detailed description, the method and apparatus of the present invention have been described with reference to specific exemplary embodiments thereto. It will, however, be evident that various modifications may be made thereto without departing from the scope of the present invention, the present invention being limited by the claims set forth herein.

## Claims

1. A method for sharing digital images over at least one network comprising the steps of:
(a) providing a network service over the network;
(b) permitting at least one share group to access a network server via the network service, the at least one share group including a plurality of members;
(c) associating a device with each of the plurality of members, each device in communication with the server, the device of one or more members of each of the at least one share group being a continuously operating display, each of the plurality of members of the at least one share group capable of being a sharing member and a receiving member;
(d) allowing each sharing member to share digital files with the receiving members of the at least one share group by uploading from the device associated with the sharing member at least one digital file to the network service;
(e) downloading from the network service the at least one digital file to the devices associated with the receiving members of the at least one share group; and
(f) automatically displaying the at least one digital file on the continuously operating displays associated with the receiving members of the at least one share group.

2. A method as recited in claim 1 wherein:
the continuously operating display is a digital media frame.

3. A method as recited in claim 1 further comprising the step of:
storing the digital files on the server.

4. A method as recited in claim 1 wherein:
the digital files are digital images.

5. A method as recited in claim 4 wherein:
the digital images include a text portion to be automatically displayed on the continuously operating displays.

6. A method as recited in claim 1 wherein:
each device includes a non-volatile memory for storing digital image files thereon.

7. A method as recited in claim 1 wherein:
the device associated with one or more members of the at least one user group is a personal computer.

8. A method as recited in claim 1 further comprising the step of:
allowing the sharing member to select via the associated device of the sharing member a subset of the members of the at least one user group to receive the uploaded digital files.

9. A method as recited in claim 8 further comprising the step of:
allowing the sharing member to select via the associated device of the sharing member to select a subset of the uploaded digital files to be shared with the receiving members of the at least one share group.

10. A method as recited in claim 1 wherein:
each of the devices of the at least one user group are remotely located from one another.

11. A method as recited in claim 1 wherein:
the network is the Internet.

12. A method as recited in claim 1 further comprising the step of:
allowing a member of one of the plurality of share groups to also be a member of at least one other share group.

13. A method as recited in claim 1 wherein:
each continuously operating display includes an interface for receiving digital images directly from a digital camera.

14. A method as recited in claim 1 wherein:
each continuously operating display includes an interface for receiving digital images directly from a digital camera memory card.

15. A method as recited in claim 1 further comprising the steps of:
(a) allowing each member to select a customized news transmission from the network service;
(b) transmitting the customized news transmission from the network service to the device associated with the member; and
(c) automatically displaying the customized news transmission on the device associated with the member when the device is the continuously operating display.

16. A method as recited in claim 15 wherein:
the customized news transmission includes financial news, sports news, and/or weather.

17. A method as recited in claim 15 wherein:
the customized news transmission includes advertising.

18. A method as recited in claim 15 wherein:
the customized news transmission includes text.

19. A method as recited in claim 15 wherein:
the customized news transmission is provided from the server.

20. A method as recited in claim 15 further comprising the step of:
connecting the continuously operating display to the network service via a telephone line, a television cable, or the Internet so that the continuously operating display can receive images and data there through.

21. A method as recited in claim 15 wherein:
the customized news transmission includes an audio portion.

22. A method as recited in claim 1 wherein:
providing each device with an identifier for enabling the network service to uniquely identify the device.

23. A method as recited in claim 1 wherein:
each continuously operating display can receive images and data from a plurality of external devices including a digital camera, a video camera, and a computer.

24. A method as recited in claim 23 further comprising the step of:
directly connecting the continuously operating display to one of the plurality of external devices to receive images and data there from.

25. A method as recited in claim 1 further comprising the step of:
providing authorization to the network service by an individual to become a member of the at least one share group.

26. A method as recited in claim 25 wherein:
the providing authorization step is performed through the device associated with the member.

27. A method as recited in claim 1 further comprising the step of:
forming a second network of a plurality of the continuously operating displays.

28. A method as recited in claim 1 wherein:
the digital files include an audio portion.

29. A computer storage medium having instructions thereon for causing a computer to perform the method of claim 1.

30. A computer program product comprising a computer readable storage medium having a computer program stored thereon which when executed by a digital processing system, causes a system to perform the method of claim 1.
